Europäisches Patentamt

(19) European Patent Office

Office européen des brevets

(11) Publication number: **0 013 693**
A1

(12) # EUROPEAN PATENT APPLICATION

(21) Application number: **79104090.0**

(22) Date of filing: **22.10.79**

(51) Int. Cl.³: **F 16 G 11/10**

---

(30) Priority: **26.10.78 IT 8363378**

(43) Date of publication of application: **06.08.80**
Bulletin 80/16

(84) Designated Contracting States: **BE CH DE FR GB LU NL SE**

(71) Applicant: **PAL DI DONA' ALESSANDRO & C. S.N.C., Via delle Orchidee, I-20020 Vanzaghello (Milano) (IT)**

(72) Inventor: **Dona, Alessandro, Via Delle Orchidee, I-20020 Vanzaghello (Milano) (IT)**

(74) Representative: **Sassi, Romano, Viale Belforte 89, I-21100 Varese (IT)**

---

(54) **Self-fastening device for ropes, cords, cables and the like.**

(57) A self-fastening device for fastening ropes, cords, cable and the like, particularly for fastening tensile stressed ropes, cords, cables and the like, comprising at least a terminal (12), a body (1) with seats (2 and 4) for a fastening member (6), a spring (3) and a cord (11), wherein the self-fastening member (3) is shaped like a ball and is idly and loosly pivoted on a shank (8) of a reel shaped member (80) which is slidably mounted in a pair of slots (9) and projects outside with a pair of operable flanges (8a and 8b), the ball and shank size being such that in operation rolling friction conditions between self-fastening member (6) and its seat 2 are determined.

- 1 -

Self-fastening device for ropes, cords, cables and the like

It is an object of the present invention a self-fastening device for ropes, cords, cables, and the like, particularly for fastening tensile stressed ropes, cords, cables and the like.

At the present status of the art a number of self-fastening devices for ropes, cords, cables and the like are known for several uses and which have one or more drawbacks. All of them comprise a connector member or cord terminal, and a body housing a spring, a fastening means and a receiving seat for rope, cord, cable or the like which provides an acute angle with the self fastening means shifting seat.

Known devices may be substantially arranged in two classes. A first class comprises all those devices in which the self-fastening member operates inside the housing body and has no outer seizable projections to drive the same and to disengage and therefore to release the rope, cord, cable or the like. In a second class may be classified those devices wherein the self fastening member is cylindrical and is provided with outer projections which are operable to release the rope, cord, cable or the like.

From the point of view of the effectiveness of the device the former were better due to the fact that the self-fastening member could be formed as a spherical or as a swelled or arcuate in two directions body. The latter were less advantageous then the former as it was thought that the outer projection of the self-fastening member could be provided only together with a cylindrical shape.

From a constructive point of view in both classes but over all in the latter difficulties were found to provide spring self-fastening member units particularly effective and cheap.

The aim of the present invention is to eliminate the aforesaid disadvantages and to offer, furthermore various advantages.

The inventor, has conceived a self-fastening unit substantially formed as a sphere which is idly pivoted on the shank of a reel shaped member whose flanges project outside to provide releasing members for the self-fastening member. On the other side the spherical shape of the self-fastening member provides a spontaneous matching between the spherical surface of same self-fastening member and the spring end which according to a preferred embodiment of the present invention is a truncate-conical spring end.

The present invention will hereinafter be further described by way of example with reference to the accompanying drawings in which: -

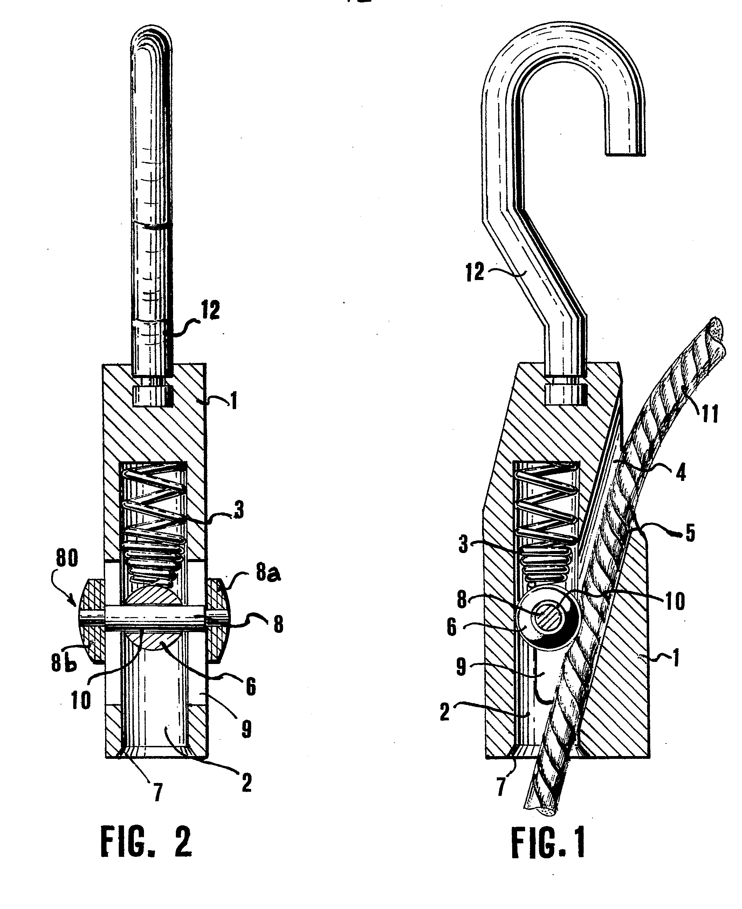

Figure 1 is an axial vertical longitudinal cross-section view of a device according to the present invention in operation.

Figure 2 is an axial horyzontal longitudinal cross-section view of device as shown in figure 1.

Referring now to the drawing figures there is shown a self-fastening device for ropes, cords, cables and the like, particularly for fastening tensile stressed ropes, cords, cables and the like comprising conventionally a terminal preferably in the form of an hook 12, a substantially solid body having a seat for receiving self-fastening member 80 and a passage for receiving therethrough a rope, cord, cable or the like and forming an acute angle with the seat 2 for receiving the self-fastening member, a self-fastening member 80 and a spring 3. The self-fastening member 80 is longitudinally movably mounted in a pair of slots 9 and projects out from body 1 with a pair of ring units 8a and 8b. Conventionally, a rope, cord, cable or the like is slipped through from the end mouth opposed to the hook 12 after having urged the self-fastening member 80 in opposition to the force of spring 3.

This is obtained by driving on projecting ends 8a and 8b. Releasing the self-fastening member i.e. releasing spring 3, the self-fastening member 80 engages ropes, cord, cables or the like 11 fastening them to the body 1: the more the rope is drawn the hardest it becomes fastened.

According to the present invention the self-fastening member 80 is substantially shaped like a ball 6 and is loosey and idly mounted on shaft 8 of member 80. Spherical member 6 is sized both relatively to the bore 2 and shaft 8 diameter so that when the spherical member 6 is radially urged by rope 11 against opposite side of base 2 it is not impeded by shaft 8. In this way a condition of rolling friction between spherical member 6 and base 2′ is provided. According to a pref erred embodiment of the invention the throat inlet 7 and outlet 5 are bevelled.

Patent claims

1. A self-fastening device for fastening ropes, cords, cable and the like, particularly for fastening tensile stressed ropes, cords, cables and the like, comprising at least a terminal (12), a body (1) with seats (2 and 4) for a fastening member (6), a spring (3) and a cord (11), wherein the self-fastening member (3) is shaped like a ball and is idly and loosly pivoted on a shank (8) of a reel shaped member (80) which is slidably mounted in a pair of slots (9) and projects outside with a pair of operable flanges (8a and 8b), the ball and shank size being such that in operation rolling friction conditions between self-fastening member (6) and its seat 2 are determined.

2. Self fastening device, as claimed in claim 1, characterized in that the spring (3) at least at the end engaging the ball (6) is shaped like a truncate cone and its terminal turns adjacent to the ball-like self fastening member (6) are closed i.e. provide a strenght neck.

3. Self-fastening device as claimed in claims 1 and 2, charachterized in that the body (1) of device is widely bevelled at the passage inlet (7) and outet (5) for the rope, cord, cable or the like (11).

0013693

1/1

FIG. 2

FIG. 1

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | CH - A - 469 918 (ANZINI) <br> * Figures 1,2; column 1, line 33 - column 2, line 42 * <br><br> -- <br><br> US - A - 3 827 674 (PASBRIG) <br> * Figure 17, column 6, lines 10-15, 56-64; figures 24,25, column 7, lines 16-21, 32-37 * <br><br> -- | 1-3 <br><br><br><br><br> 1,2 | F 16 G 11/10 |
| A | FR - A - 2 076 703 (LAINE) <br> * Figures 8,9; page 7, line 22 - page 8, line 8 * <br><br> -- | | **TECHNICAL FIELDS SEARCHED (Int.Cl. 3)** <br><br> F 16 G <br> B 66 C <br> B 66 D <br> H 01 R <br> F 16 B |
| A | US - A - 3 551 883 (PASBRIG) <br> * Figures 3,4; column 2, line 59 - column 3, line 25 * <br><br> ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-01-1980 | JAIK |

EPO Form 1503.1 06.78